# DEMANDE DE BREVET EUROPEEN

(11) **EP 4 790 510 A1**
(43) Date de publication de la demande: **12.08.2026**
(21) Numéro de dépôt: 26157681.3
(22) Date de dépôt: 10.02.2026
(51) Int. Cl.: G05D 1/485, G05D 1/644, G05D 1/652, G05D 105/22, G05D 109/22, B64C 13/00, G01C 23/00, B64D 45/00, G08G 5/00

(54) **MÉTHODE DE DÉTERMINATION D'UNE TRAJECTOIRE D'AÉRONEF PRÉSENTANT UN ABATTEMENT DE BRUIT AU DÉCOLLAGE AYANT UNE PENTE PLANCHER, PROCÉDÉ, SYTÈME DE DÉTERMINATION ET AÉRONEF ASSOCIÉS**

(30) Priorité: 11.02.2025 FR 2501385
(71) Demandeur: Dassault Aviation, 92210 Saint-Cloud (FR)
(72) Inventeur: FAYSSE, WILLIAM, 92552 Saint-Cloud Cedex (FR); ALBRIEUX, Jean-Noël, 92552 Saint-Cloud Cedex (FR); BARDON, Thibaut, 92552 Saint-Cloud Cedex (FR); COUREAUD, Yann, 33701 Merignac (FR); VALLART, Jean-Baptiste, 13804 Istres CEDEX (FR); RECHAIN, Bruno, 33701 Merignac (FR)
(74) Mandataire: Lavoix

(57) **Abrégé**

Méthode de détermination d'une trajectoire d'aéronef présentant un abattement de bruit au décollage ayant une pente plancher, procédé, système de détermination et aéronef associés.

La méthode de détermination est mise en œuvre à l'aide d'un système de détermination et comprend les étapes suivantes :

- détermination de caractéristiques d'un segment initial de trajectoire (22) effectué à poussée maximale jusqu'à une altitude minimale prédéfinie (23) ;

- détermination de caractéristiques d'au moins un segment de trajectoire présentant un abattement de bruit (24, 26) avec une poussée réduite par rapport à la poussée maximale pour atteindre une vitesse de consigne ;

- définition d'au moins une pente plancher à respecter par l'aéronef en correspondance avec le ou avec chaque segment de trajectoire présentant un abattement de bruit (24, 26).

## Description

La présente invention concerne une méthode de détermination d'une trajectoire d'aéronef présentant un abattement de bruit au décollage, la méthode de détermination étant mise en œuvre à l'aide d'un système de détermination et comprenant les étapes suivantes :
- détermination de caractéristiques d'un segment initial de trajectoire effectué à poussée maximale jusqu'à une altitude minimale prédéfinie ;
- détermination de caractéristiques d'au moins un segment de trajectoire présentant un abattement de bruit avec une poussée réduite par rapport à la poussée maximale pour atteindre une vitesse de consigne.

La trajectoire d'aéronef présentant un abattement de bruit est destinée à être mise en œuvre lors du décollage d'un l'aéronef, afin de minimiser l'impact sonore au sol résultant en particulier du bruit des moteurs de l'aéronef.

Une telle procédure d'abattement de bruit au décollage (désignée par le terme anglais « Noise Abatement Departure Procedure » ou « par l'acronyme « NADP ») est généralement mise en œuvre au voisinage de terrains présentant à une distance plus ou moins proche du terrain, une densité importante de population. La procédure a pour objectif de réduire l'empreinte de bruit au sol de l'aéronef au décollage, sur un segment de trajectoire à distance du terrain.

Il existe principalement deux types de procédures avec abattement de bruit au décollage. Dans un premier type de procédure (qualifiée de « Close In »), une réduction de poussée des moteurs est effectuée à une première altitude, par exemple 244 mètres (800 pieds), en maintenant la vitesse sensiblement constante, puis une accélération de l'aéronef est réalisée une fois que l'aéronef atteint une plus haute altitude, par exemple à partir de 914 mètres (3000 pieds).

Dans un deuxième type de procédure (qualifiée de « distant »), une phase d'accélération est réalisée à partir de l'altitude de 244 mètres (800 pieds), sans réduction significative de la poussée des moteurs, afin de rétracter les becs et les volets. Puis, une réduction de poussée est effectuée à plus haute altitude, pour réaliser l'abattement de bruit.

Les consignes de réduction de poussée sont basées en général sur une réduction du régime moteur, en agissant par exemple sur le niveau de régime moteur (« rating » en anglais), sur le pourcentage N1 de vitesse de rotation des moteurs par rapport à la vitesse de rotation maximale en mode normal, ou sur un rapport entre la pression de décharge de la turbine, et la pression d'entrée du compresseur (« Engine Pressure Ratio » ou « EPR » en anglais).

En variante, la consigne à respecter pour l'abattement de bruit est définie par un paramètre vertical, notamment une vitesse verticale ou une pente.

De tels modes de commande de la réduction de poussée ne donnent pas entière satisfaction, notamment pour assurer un respect des contraintes de franchissement d'obstacles ou à respecter au décollage, en particulier en cas de perte moteur ou de gradient aéroportuaire à respecter.

Traditionnellement, la trajectoire d'un aéronef au décollage est calculée en supposant qu'un moteur soit défectueux (« one engine inpoerative » ou « OEI » en anglais) tout en permettant de respecter le franchissement d'obstacles. Cependant, la trajectoire est généralement volée avec tous les moteurs fonctionnant (« all engine operative » ou « AEO » en anglais) ce qui correspond à deux fois la poussée qui s'applique lorsqu'un moteur est défectueux. Ceci garantit le franchissement d'obstacles.

Dans le cas d'une réduction de poussée pour réaliser un abattement de bruit, voler avec une poussée juste suffisante permet d'optimiser la trajectoire en terme de bruit et de confort.

La contrepartie est que l'aéronef peut dans certains cas se rapprocher des contraintes, notamment les obstacles ou les gradients aéroportuaires.

Un but de l'invention est donc de fournir un procédé qui permette de déterminer une trajectoire d'aéronef présentant un abattement de bruit au décollage très efficace, tout en garantissant des marges de sécurité adéquates lors de la mise en œuvre de la trajectoire.

A cet effet, l'invention a pour objet une méthode de détermination du type précité, caractérisée par la définition d'au moins une pente plancher à respecter par l'aéronef en correspondance avec le ou avec chaque segment de trajectoire présentant un abattement de bruit.

La méthode de détermination selon l'invention peut comprendre l'une ou plusieurs des caractéristiques suivantes, prise(s) isolément ou suivant toutes combinaisons techniquement possibles :
- la méthode comprend la définition d'une pluralité de tronçons de pente plancher, chaque tronçon de pente plancher définissant une pente plancher distincte ;
- la méthode comprend au moins deux segments de trajectoire présentant un abattement de bruit, les tronçons de pente plancher respectifs associés à chaque segment de trajectoire présentant un abattement de bruit respectif présentant des pentes planchers différentes l'une de l'autre ;
- la définition de chaque tronçon de pente plancher est effectuée en fonction d'une cartographie définissant au moins un obstacle ou une contrainte de trajectoire, notamment un gradient aéroportuaire, en regard du ou de chaque segment de trajectoire présentant un abattement de bruit ;
- la méthode comprend la définition d'une pente plancher commune correspondant à plusieurs segments de trajectoire présentant un abattement de bruit ;
- la méthode comprend la définition d'une pente plancher unique pour tous les segments de trajectoire présentant un abattement de bruit depuis un point final du segment initial de trajectoire à l'altitude minimale prédéfinie ;
- la détermination des caractéristiques de l'au moins un segment de trajectoire présentant un abattement de bruit comprend la définition d'au moins une consigne de pente ou de pseudo-pente totale assurant la poussée réduite, la pente plancher étant égale à la consigne de pente ou de pseudo pente totale moins une marge de prise en compte de conditions atmosphériques extérieures ou/et la pente plancher étant égale à la pente nécessaire pour assurer une accélération de l'aéronef supérieure à un seuil d'accélération minimale donné ;
- la méthode comprend l'affichage sur un écran du système de détermination d'une représentation de la trajectoire comprenant le segment initial de trajectoire et le ou chaque segment de trajectoire présentant un abattement de bruit, avec la pente plancher à respecter par l'aéronef en correspondance avec le ou chaque segment de trajectoire présentant un abattement de bruit ou/et la transmission des caractéristiques du segment initial de trajectoire et des caractéristiques définies du ou de chaque segment de trajectoire présentant un abattement de bruit à un système de gestion de vol de l'aéronef et de la pente plancher à respecter par l'aéronef en correspondance avec le ou chaque segment de trajectoire présentant un abattement de bruit.

L'invention a également pour objet un procédé de pilotage d'un aéronef suivant une trajectoire d'aéronef présentant un abattement de bruit au décollage, comprenant les étapes suivantes :
- suivi d'un segment initial de trajectoire effectué à poussée maximale jusqu'à une altitude minimale prédéfinie;
- suivi d'au moins un segment de trajectoire présentant un abattement de bruit avec une poussée réduite par rapport à la poussée maximale pour atteindre une vitesse de consigne, caractérisé par le maintien de la pente de l'aéronef au-dessus d'une pente plancher à respecter par l'aéronef définie en correspondance avec le ou chaque segment de trajectoire présentant un abattement de bruit avec une poussée réduite, lors de la mise en œuvre du ou de chaque segment de trajectoire présentant un abattement de bruit.

Le procédé de pilotage selon l'invention peut comprendre l'une ou plusieurs des caractéristiques suivantes, prise(s) isolément ou suivant toutes combinaisons techniquement possibles :
- le procédé comprend, lors de la mise en œuvre de l'au moins un segment de trajectoire présentant un abattement de bruit, le suivi d'au moins une consigne de pente ou de pseudo-pente totale assurant la poussée réduite, la pente plancher étant égale à la consigne de pente ou de pseudo pente totale moins une marge de prise en compte de conditions atmosphériques extérieures ou étant égale à la pente nécessaire pour assurer une accélération de l'aéronef supérieure à un seuil d'accélération minimale donné ;
- le procédé comprend, lors de la mise en œuvre de l'au moins un segment de trajectoire présentant un abattement de bruit, la comparaison entre une pente réelle de l'aéronef et la pente plancher, et l'émission d'une information d'alerte dans le cas où la pente réelle devient inférieure à la pente plancher ;
- le procédé comprend la mise en œuvre d'un pilotage automatique de l'aéronef pour rétablir une pente réelle supérieure à la pente plancher dans le cas où la pente réelle devient inférieure à la pente plancher.

L'invention a également pour objet un système de détermination d'une trajectoire d'aéronef présentant un abattement de bruit au décollage, comprenant:
- un module de détermination de caractéristiques d'un segment initial de trajectoire effectué à poussée maximale jusqu'à une altitude minimale prédéfinie;
- un module de détermination de caractéristiques d'au moins un segment de trajectoire présentant un abattement de bruit avec une poussée réduite par rapport à la poussée maximale pour atteindre une vitesse de consigne, caractérisé par :
   un module de définition d'au moins une pente plancher à respecter par l'aéronef en correspondance avec le ou avec chaque segment de trajectoire présentant un abattement de bruit. .

L'invention a aussi pour objet un aéronef comprenant un système de gestion de vol configuré pour suivre ou guider un pilote le long d'une trajectoire d'aéronef présentant un abattement de bruit au décollage, la trajectoire comprenant:
- un segment initial de trajectoire effectué à poussée maximale jusqu'à une altitude minimale prédéfinie;
- au moins un segment de trajectoire présentant un abattement de bruit avec une poussée réduite par rapport à la poussée maximale pour atteindre une vitesse de consigne, caractérisé en ce que le système de gestion de vol est configuré pour maintenir au moins une pente plancher à respecter par l'aéronef en correspondance avec le ou avec chaque segment de trajectoire présentant un abattement de bruit.

L'invention sera mieux comprise à la lecture de la description qui va suivre, donnée uniquement à titre d'exemple, et faite en se référant aux dessins annexés, sur lesquels :
- [Fig. 1] La figure 1 est vue schématique des éléments pertinents d'un aéronef selon l'invention, muni d'un système de détermination selon l'invention ;
- [Fig. 2] La figure 2 est une vue en coupe dans un plan vertical d'une trajectoire d'aéronef présentant un abattement de bruit au décollage, obtenue par la méthode de détermination selon l'invention ;

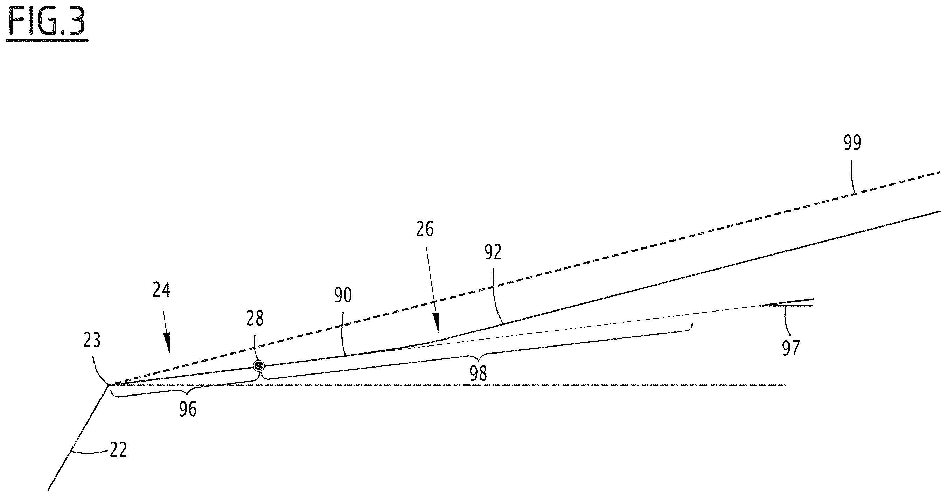

- [Fig. 3] La figure 3 est une vue d'un détail de la trajectoire, lors d'une phase d'abattement de bruit au décollage ;
- [Fig. 4] La figure 4 est une vue analogue à la figure 2 d'une variante de trajectoire ;
- [Fig. 5] La figure 5 est une vue analogue à la figure 2 d'une pente plancher à respecter par l'aéronef en correspondance avec des segments de trajectoire présentant des abattements de bruit, et d'une pente réellement volée par l'aéronef ; et
- [Fig. 6] La figure 6 est une vue schématique d'un écran de pilotage présenté au pilote lors du vol de l'aéronef.

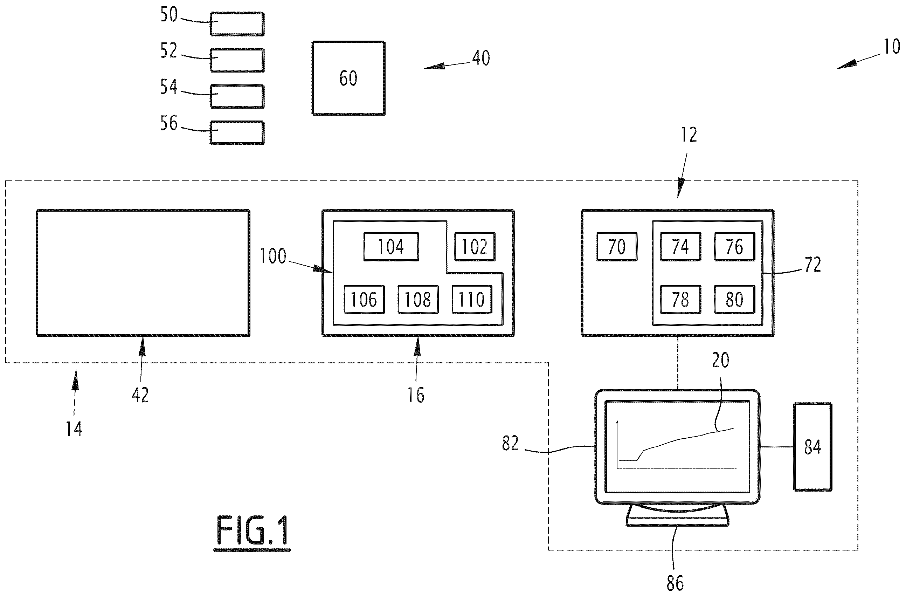

Une méthode de détermination d'une trajectoire 20 présentant un abattement de bruit au décollage pour un aéronef 10 est mise en œuvre dans un système de détermination 12 représenté schématiquement sur la figure 1.

Le système de détermination 12 est par exemple embarqué dans l'aéronef 10, par exemple en étant intégré au sein d'une avionique 14 de l'aéronef. Le système de détermination 12 est notamment raccordé à un système de gestion de vol 16 (« Flight Management System » ou FMS en anglais) qui permet à l'équipage de déterminer et/ou de mettre en œuvre une trajectoire horizontale et verticale de l'aéronef 10 lors d'une mission de l'aéronef 10.

En variante, le système de détermination 12 est intégré dans un système de planification de mission non-embarqué, par exemple dans une infrastructure aéroportuaire d'établissement de trajectoires d'aéronef, dans un bagage de vol électronique (« Electronic Flight Bag » ou « EFB ») et/ou dans un dispositif électronique portable, comme par exemple une tablette ou dans un ordinateur de type PC ou serveur au sol.

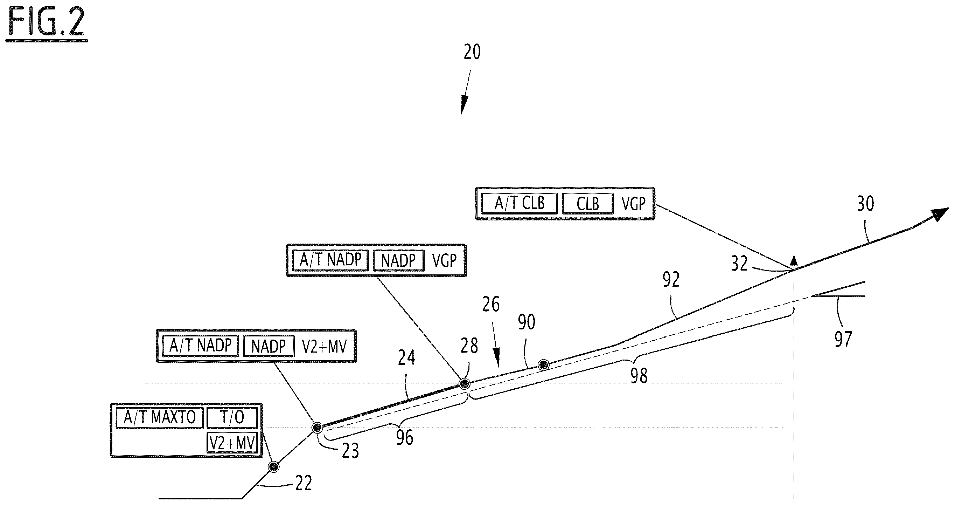

Un exemple de trajectoire 20 présentant un abattement de bruit au décollage, tel que déterminée par le système de détermination 12 est illustré sur la figure 2, pour une procédure d'abattement de bruit de proximité (ou « close-in » en anglais).

La trajectoire 20 visible sur la figure 2 comprend un segment initial 22 de trajectoire, effectué avec une poussée maximale et une pente déterminée depuis le sol jusqu'à une altitude minimale prédéfinie 23 d'initiation de l'abattement de bruit. Elle comprend ensuite au moins un segment 24, 26 de trajectoire présentant un abattement de bruit avec une poussée réduite, pour atteindre une vitesse de consigne VGP.

La trajectoire 20 comprend ici deux segments successifs 24, 26 d'abattement de bruit.

La trajectoire 20 inclut ainsi un premier segment 24 réalisé à vitesse constante V2 + MV et selon l'invention, en suivant une première consigne de pseudo-pente totale TD_{NRED} assurant une poussée réduite.

Elle inclut également un deuxième segment 26, mis en œuvre à partir d'une deuxième altitude minimale 28, en suivant une deuxième consigne de pseudo-pente totale TD_{NACC} dans lequel la vitesse de l'aéronef croit jusqu'à la valeur de consigne VGP et l'aéronef 10 tend ensuite à atteindre une pente sensiblement égale à la deuxième pseudo-pente totale TD_{NACC}. Dans cet exemple, la valeur de la deuxième consigne de pseudo-pente totale TD_{NACC} est supérieure à la valeur de la première consigne de pseudo-pente totale TD_{NRED}.

Plus généralement, la trajectoire 20 peut comprendre plus de deux segments successifs d'abattement de bruit, chaque segment d'abattement de bruit étant associé à une altitude d'entrée et à une consigne de pseudo-pente totale respective.

La trajectoire 20 comprend ensuite un segment de montée 30, mis en œuvre à partir d'une altitude 32 choisie par le pilote ou par le système de gestion de vol 16.

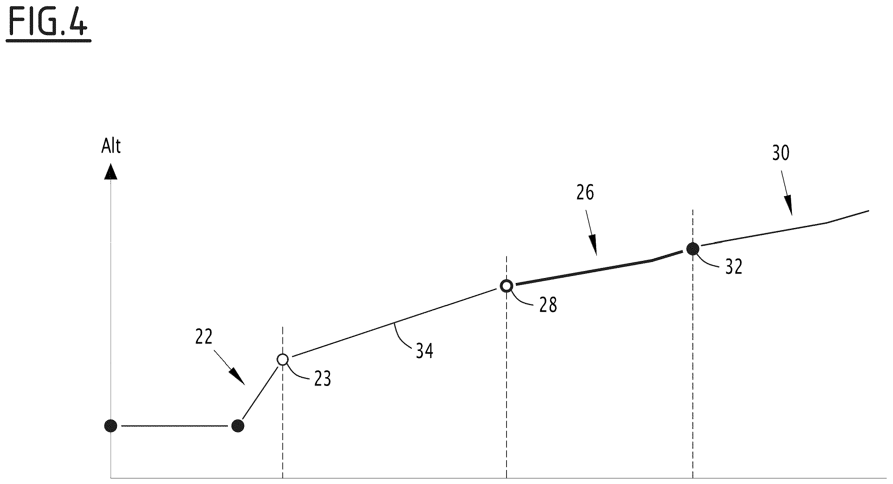

Dans un deuxième exemple représenté sur la figure 4, pour une procédure d'abattement distant, la trajectoire 20 comprend le premier segment initial 22, puis, à l'issue du premier segment initial 22, à la première altitude 23, un deuxième segment initial 34, lors duquel les volets et les becs sont rétractés, avec une consigne de pseudo-pente totale pour ce deuxième segment initial étant égale à la pseudo pente T0 au régime moteur maximal.

La trajectoire 20 comprend ensuite un segment d'abattement de bruit 24 distant, réalisé avec une consigne de pseudo-pente constante TD_{NACC}. Dans ce dernier cas, la valeur de la consigne de pseudo-pente totale TD_{NACC} du segment d'abattement de bruit 24 distant est inférieure à la valeur de la pseudo pente T0.

En référence à la figure 1, outre le système de gestion de vol 16, l'aéronef 10 comprend en outre un dispositif 40 de gestion d'énergie mécanique permettant de commander une variation d'énergie de l'aéronef 10 à partir d'une consigne de pseudo-pente totale, un système de pilotage automatique 42 relié au système de gestion de vol 16 et au dispositif de gestion de variation d'énergie mécanique 40 pour exécuter des commandes de pilotage automatique de l'aéronef 10, notamment en ce qui concerne la variation d'énergie mécanique de l'aéronef 10, et sa trajectoire horizontale ou/et verticale.

L'aéronef 10 comporte également plusieurs moteurs de propulsion 50, des organes 52 de modification d'énergie mécanique de l'aéronef 10, des capteurs 54 de mesure de paramètres de vol, et une centrale de commande de vol 56, configurée pour commander chacun des moteurs 50 et les organes de modification d'énergie mécanique 52.

Chaque moteur de propulsion 50 est configuré pour être piloté par la centrale de commande de vol 56, pour faire évoluer une force de poussée sur l'aéronef 10, augmentant ou diminuant l'énergie mécanique totale de l'aéronef 10.

Les organes de modification d'énergie mécanique 52 sont avantageusement des organes de modification de la trainée de l'aéronef 10. Ils comportent par exemple des aérofreins, des becs et/ou des volets déployables ou encore les trains d'atterrissage. Chaque organe de modification d'énergie mécanique 52 est configuré pour être piloté par la centrale de commande de vol 56 pour faire évoluer une force de trainée sur l'aéronef 10, diminuant ou augmentant l'énergie mécanique totale de l'aéronef 10.

Chaque moteur de propulsion 50 et chaque organe de modification d'énergie mécanique 52 constituent donc une source de variation d'énergie mécanique de l'aéronef 10.

Les capteurs de mesure de paramètres de vol 54 sont configurés notamment pour déterminer la position, l'altitude, les vitesses air et sol, ainsi que les pentes air et sol de l'aéronef 10.

La centrale de commande de vol 56 comporte au moins un processeur, et une mémoire contenant une pluralité de modules logiciels propres à être exécutés par le processeur.

La mémoire contient en particulier un module d'élaboration des commandes des moteurs 50 et d'élaboration des commandes des organes de modification d'énergie mécanique 52.

Elle contient avantageusement un module de calcul d'une grandeur représentative de la variation d'énergie mécanique de l'aéronef exprimée sous forme d'une pseudo-pente totale, en fonction des paramètres de vol.

Le module d'élaboration des commandes est configuré pour calculer les commandes des moteurs 50 et des organes 52 de modification d'énergie sur la base d'une consigne reçue du dispositif de gestion d'énergie 40, lorsque l'aéronef 10 est en mode de pilotage manuel, ou sur la base d'une consigne reçue du système de pilotage automatique, 42 lorsque l'aéronef 10 est en mode de pilotage automatique.

Le module de calcul de la grandeur représentative de la variation d'énergie mécanique est par exemple configuré pour calculer une variation courante d'énergie mécanique de l'aéronef et une plage de variations d'énergie mécanique susceptibles d'être atteintes par l'aéronef 10 à chaque instant, en fonction des paramètres de vol obtenus à partir des capteurs 54, et de la situation opérationnelle de l'aéronef.

La situation opérationnelle de l'aéronef 10 inclut notamment l'évolution de l'aéronef 10 au sol ou en vol et les équipements disponibles, en particulier le nombre de moteurs 50 et la poussée individuelle développée par chaque moteur 50 et le nombre d'organes de modification d'énergie mécanique 52 et la position de chaque organe de modification d'énergie mécanique 52.

La grandeur représentative de la variation d'énergie mécanique est ici une pseudo-pente totale, telle que calculée dans le brevet FR 2 958 033 de la Demanderesse. Cette pseudo-pente totale est définie comme la pente sol, qui aux conditions courantes, conduit à une vitesse conventionnelle constante.

La pseudo-pente totale *γ** est par exemple calculée par la formule suivante : ${γ}^{*} = {γ}_{sol} + \frac{{\left(\frac{\partial {V}_{air}}{\partial {V}_{c}}\right)}_{z = cste}}{1 + \frac{{V}_{sol}}{g} \cdot {\left(\frac{\partial {V}_{air}}{\partial z}\right)}_{Vc = cste}} \frac{{\dot{V}}_{c}}{g} = {γ}_{sol} + K \cdot \frac{{\dot{V}}_{c}}{g}$ où γₛₒₗ est la pente sol de l'aéronef 10, Vₛₒₗ est la vitesse de l'aéronef 10 par rapport au sol, Vₐᵢᵣ est la vitesse air de l'aéronef 10, V_{c} est la vitesse conventionnelle de l'aéronef 10, g est l'accélération de la pesanteur et z est l'altitude de l'aéronef 10.

Le dispositif de gestion d'énergie 40 comporte de préférence une manette 60, mobile sur une course de commande permettant au pilote de définir une valeur de consigne de pseudo-pente totale en pilotage manuel.

Avantageusement, la centrale de commande de vol 56 comporte alors un module de commande de la position de la manette mobile 60 sur la course de commande configuré pour élaborer une commande de position de la manette mobile 60 en fonction de la pseudo-pente totale courante, et de la plage de variations de pseudo-pentes totales susceptibles d'être atteintes par l'aéronef 10.

La position calculée de la manette mobile 60 traduit la pseudo-pente totale de l'aéronef 10 dans la plage de variations de pseudo-pentes totales susceptibles susceptibles d'être atteintes par l'aéronef 10. Cette position est désignée comme une position de « neutre mobile », et varie au cours du temps, sans intervention de l'utilisateur suivant la configuration d'évolution de l'aéronef 10, dans le mode de pilotage automatique.

Les bornes de la plage de variations de pseudo-pentes totales susceptibles d'être atteintes varient également au cours du temps en fonction de la situation de l'aéronef (notamment position, vitesse, attitude, poussée disponible, trainée disponible, etc).

Le maintien de la pseudo-pente totale de l'aéronef 10, et donc la position du neutre mobile est avantageusement asservie par le système de pilotage automatique 42 en mode de pilotage automatique.

La pseudo-pente totale de l'aéronef 10 peut être également réglée manuellement par le pilote en déplaçant la manette mobile 60 à l'écart de la position de neutre mobile pour définir une nouvelle consigne de pseudo-pente totale souhaitée, dans la plage de pseudo-pentes totales susceptibles d'être atteintes par l'aéronef 10.

En référence à la figure 1, le système de détermination 12 de la trajectoire 20 comporte avantageusement au moins un calculateur comportant au moins un processeur 70 et une mémoire 72 contenant une pluralité de modules logiciels propres à être exécutés par le processeur 70.

En variante, le système de détermination 12 se présente au moins partiellement sous la forme d'un ou de plusieurs circuits programmables par exemple de type FPGA (de l'anglais « Field-Programmable Gate Array ») ou sous forme d'un circuit électronique dédié à une application de type ASIC (de l'anglais « Application-Specific Integrated Circuit).

Dans cet exemple, le système de détermination 12 comprend un module 74 de détermination de caractéristiques du segment initial 22, un module 76 de détermination de caractéristiques de chaque segment de trajectoire 24, 26 présentant un abattement de bruit, et un module 78 de définition d'une pente plancher à respecter par l'aéronef 10 en correspondance avec le ou chaque segment de trajectoire 24, 26 présentant un abattement de bruit.

Avantageusement, le système de détermination 12 comprend un module 80 de transmission des caractéristiques de la trajectoire 20 au système de gestion de vol 16.

Le système de détermination 12 comporte de préférence au moins un écran 82 d'affichage, et un gestionnaire 84 d'affichage d'informations sur l'écran d'affichage 82, en particulier d'affichage d'une représentation graphique de la trajectoire 20 dans un plan vertical, destinée à être visualisée par le pilote, et une interface homme-machine 86.

Le module 74 de détermination des caractéristiques du segment initial de trajectoire 22 est configuré pour définir la première altitude minimale 23 prédéfinie jusqu'à laquelle une poussée maximale est appliquée, ainsi que la valeur de la poussée maximale qui est appliquée. Il est aussi configuré pour déterminer une pente de consigne de l'aéronef 10 sur ce segment initial 22.

Dans l'exemple de la figure 1, le segment initial de trajectoire 22 est associé à un mode de gestion de vol du système de gestion de vol 16, notamment un mode de décollage T/O du système de gestion de vol 16.

L'altitude minimale prédéfinie 23 est par exemple comprise entre 200 m et 500 m, notamment égale à 244 mètres (800 pieds). Cette altitude est définie comme une altitude au-dessus du terrain (« above airport elevation » ou AAE en anglais).

La poussée maximale au décollage est par exemple définie par une valeur de pourcentage N1 de vitesse de rotation des moteurs par rapport à la vitesse de rotation maximale en mode normal, supérieure à 75 %, notamment comprise entre 85 % et 100 %.

Le module 74 de détermination des caractéristiques du segment initial de trajectoire 22 est configuré pour définir, dans le segment initial 22, une vitesse initiale VI égale à la vitesse de décollage V2 plus une marge de vitesse MV.

Le module de détermination 76 des segments de trajectoire 24, 26 est configuré pour déterminer chaque segment de trajectoire 24, 26 présentant un abattement de bruit par définition d'au moins une consigne de pseudo-pente totale TD_{NRED}, TD_{NACC}, assurant une poussée réduite et donc un abattement de bruit.

Ainsi, le module de détermination 76 est configuré pour définir le premier segment de trajectoire 24 avec abattement de bruit à partir de la première altitude minimale 23 en conservant une vitesse égale à la vitesse de décollage V2 plus une marge de vitesse MV définie. La marge de vitesse MV est par exemple comprise entre 9 km/h (5 nœuds) et 46 km/h (25 nœuds), notamment égale à 28 km/h (15 nœuds).

Le module de détermination 76 est configuré pour définir, dans ce premier segment de trajectoire avec abattement de bruit 24, une première consigne de pseudo-pente totale TD_{NRED}.

De préférence, la première consigne de pseudo-pente totale TD_{NRED} est une valeur constante pour un type d'aéronef 10, calculée préalablement lors de la conception de l'aéronef 10, et stockée dans la mémoire 72.

En variante, la première consigne de pseudo-pente totale TD_{NRED} est déterminée avant le vol, par exemple lors de l'établissement du plan de vol de l'aéronef 10.

La première consigne de pseudo-pente totale TD_{NRED} est calculée avantageusement à partir des caractéristiques de l'aéronef 10, en particulier de son type, de son nombre de moteurs, de sa poussée maximale, et/ou de sa poussée minimale, de contraintes de bruit à respecter définies sur le ou les terrains d'intérêt, et de caractéristiques de performances à remplir établis par l'avionneur, notamment des critères opérationnels, comme par exemple les pentes minimales imposées par l'aéroport et des critères de réglementation applicable, comme par exemple l'Advisory Circular 91-53A « Noise Abatement Departure Profile » de la Federal Aviation Administration.

L'utilisation d'une valeur constante de pseudo-pente totale, définit une seule consigne qui dépend des contraintes précitées, et qui peut être utilisée de manière universelle, sans avoir à consulter des tables fonction de la configuration, de la masse, de l'altitude, de la température, comme pour le cas d'une consigne de valeur de pourcentage N1 de vitesse de rotation des moteurs.

La consigne de pseudo-pente totale peut donc être une valeur unique constante qui permettra de respecter un critère particulier, par exemple de passer la plus forte des toutes les pentes minimales imposées par les aéroports, ou une plage de pentes plus faibles, mais permettant des réductions de poussée plus fortes. Dans le second cas, si on rencontre une pente plus élevée que celle qui est définie, la valeur de consigne de pseudo-pente totale choisie est alors modifiée.

Avantageusement, la valeur de la première consigne de pseudo-pente totale TD_{NRED} est par exemple comprise entre 3° à 7°.

Dans l'exemple de la figure 2, le module de détermination 76 est configuré pour déterminer la fin du premier segment 24 et le début du deuxième segment 26 à la deuxième altitude 28 supérieure à la première altitude minimale 23, par exemple comprise entre 762 m (2500 pieds) et 1067 m (3500 pieds) en particulier égale à 914 m (3000 pieds).

Le module de détermination 76 est configuré pour définir dans ce deuxième segment de trajectoire avec abattement de bruit 26, une deuxième consigne de pseudo-pente totale TD_{NACC}, de valeur par exemple supérieure à la valeur de la première consigne de pseudo-pente totale TD_{NRED}.

Le module de détermination 76 est configuré pour définir, dans ce deuxième segment de trajectoire avec abattement de bruit 26, un premier tronçon 90 permettant une accélération de l'aéronef 10 jusqu'à une vitesse de consigne VGP définie, supérieure à la vitesse V2 + MV définie dans le premier segment de trajectoire avec abattement de bruit 24 et dans le segment initial 22, et une fois la vitesse de consigne VGP atteinte, un deuxième tronçon 92 autorisant une augmentation de la pente de l'aéronef 10 à la vitesse de consigne VGP constante jusqu'à sensiblement la deuxième consigne de pseudo-pente totale TD_{NACC}.

La deuxième consigne de pseudo-pente totale TD_{NACC} est par exemple constante sur tout le deuxième segment de trajectoire 26. En variante, la deuxième consigne de pseudo-pente totale TD_{NACC} varie le long du segment de trajectoire 26 en présentant par exemple une valeur dans le premier tronçon 90 inférieure à la valeur dans le deuxième tronçon 92.

De préférence, la deuxième consigne de pseudo-pente totale TD_{NACC} est une valeur constante pour un type d'aéronef 10, calculée préalablement lors de la conception de l'aéronef 10, et stockée dans la mémoire 72.

En variante, la deuxième consigne de pseudo-pente totale TD_{NACC} est déterminée avant le vol, par exemple lors de l'établissement du plan de vol de l'aéronef 10.

La deuxième consigne de pseudo-pente totale TD_{NACC} est calculée avantageusement à partir des caractéristiques de l'aéronef 10, en particulier de son type, de son nombre de moteurs, de sa poussée maximale, et/ou de sa poussée minimale, de contraintes de bruit à respecter définies sur le ou les terrains d'intérêt, de la capacité d'accélération de l'aéronef et de caractéristiques de performances à remplir établis par l'avionneur, notamment des critères opérationnels, comme par exemple les pentes minimales imposées par l'aéroport et des critères de réglementation applicable, comme par exemple l'Advisory Circular 91-53A « Noise Abatement Departure Profile » de la Federal Aviation Administration.

Dans l'exemple représenté sur la figure 2, la valeur de la deuxième consigne de pseudo-pente totale TD_{NACC} est avantageusement supérieure à la valeur de la première consigne de pseudo-pente totale TD_{NRED}.

De préférence, cette valeur correspond à une accélération minimale de 0,51 m/s⁻² (soit 1kt/s), soit généralement 3° au-dessus de la pente minimale à respecter.

Elle est par exemple comprise entre 3° et 8°.

Le module de détermination 76 est également configuré pour définir au moins une pente de consigne de l'aéronef dans chaque segment avec abattement de bruit 24, 26 destinée au système de gestion de vol 16, notamment pour définir un symbole de directeur de vol.

Le module 78 de détermination de pente plancher est configuré pour déterminer au moins une pente plancher à respecter par l'aéronef 10, correspondant à chaque segment de trajectoire 24, 26 avec abattement de bruit.

Dans l'exemple illustré par la figure 2, le module de détermination 78 est configuré pour déterminer un premier tronçon 96 de pente plancher ayant une première valeur dans le premier segment de trajectoire avec abattement de bruit 24 et un deuxième tronçon de pente plancher 98 ayant une deuxième valeur dans le deuxième segment de trajectoire avec abattement de bruit 26.

Par exemple, le module de détermination 78 est configuré pour déterminer le premier tronçon 96 de pente plancher à partir de l'altitude minimale prédéfinie 23 en ayant une pente égal à la valeur de la première consigne de pseudo-pente totale TD_{NRED} définie par le module de détermination 74 pour le premier segment de trajectoire 24, moins une marge MP de prise en compte de conditions atmosphériques extérieures à l'aéronef 10 pouvant affecter localement le maintien de la première consigne de pseudo-pente totale TD_{NRED} par la centrale de commande de vol 56.

Par exemple, la marge MP présente une valeur en degrés comprise entre 1° et 3°

Le module de détermination de pente 78 est en outre configuré pour déterminer le deuxième tronçon 98 de pente plancher en correspondance avec le deuxième segment de trajectoire 26, à partir de la deuxième altitude minimale comme ayant une pente égale à une pente minimale à respecter pour obtenir une accélération de l'aéronef 10 supérieure à un seuil d'accélération minimale donné. Le seuil d'accélération minimale donné est avantageusement déterminé par des pilotes évaluateurs pour éviter la sensation de trainer en vitesse.

Par exemple, ce seuil est compris entre 0,26 m/s⁻² et 1,03 m/s⁻² (0,5 kt/s et 2kts/s). Ceci confère une sensation d'accélération au pilote.

Cette pente minimale à respecter est par exemple supérieure à 3°, notamment comprise entre 3,5° et 5,5°. Elle est strictement inférieure à la valeur de la deuxième consigne de pseudo-pente totale TD_{NACC}.

En variante, le module de détermination de pente 78 est configuré pour déterminer deuxième tronçon 98 de pente plancher en correspondance avec le deuxième segment de trajectoire 26 en ayant une pente égal à la valeur de la deuxième consigne de pseudo-pente totale TD_{NACC} définie par le module de détermination 76 pour le deuxième segment de trajectoire 26, moins une marge MP de prise en compte de conditions atmosphériques extérieures à l'aéronef 10 pouvant affecter localement le maintien de la deuxième consigne de pseudo-pente totale TD_{NACC} par la centrale de commande de vol 56.

Par exemple, la marge MP présente une valeur en degrés comprise entre 1° et 3°.

En variante encore, le module de détermination de pente 78 est configuré pour déterminer le tronçon 96 de pente plancher ayant une première valeur dans le premier segment de trajectoire avec abattement de bruit 24 comme ayant une pente égale à une pente minimale à respecter pour obtenir une accélération de l'aéronef 10 supérieure à un seuil d'accélération minimale donné. Le seuil d'accélération minimale donné est avantageusement déterminé par des pilotes évaluateurs pour éviter la sensation de trainer en vitesse.

Par exemple, ce seuil est compris entre 0,26 m/s⁻² et 1,03 m/s⁻² (0,5 kt/s et 2kts/s). Ceci confère une sensation d'accélération au pilote.

Avantageusement, dans un mode de réalisation, la pente plancher déterminée à partir de la première altitude 23 est supérieure à une pente minimale 97 respectant la présence d'obstacles, les contraintes règlementaires et les marges de sécurité de l'aéronef 10. Cette pente est par exemple supérieure à 2%, notamment supérieure à 6 %. La pente est par exemple comprise entre 2,5% et 10%, notamment comprise entre 6,5% et 8,5%.

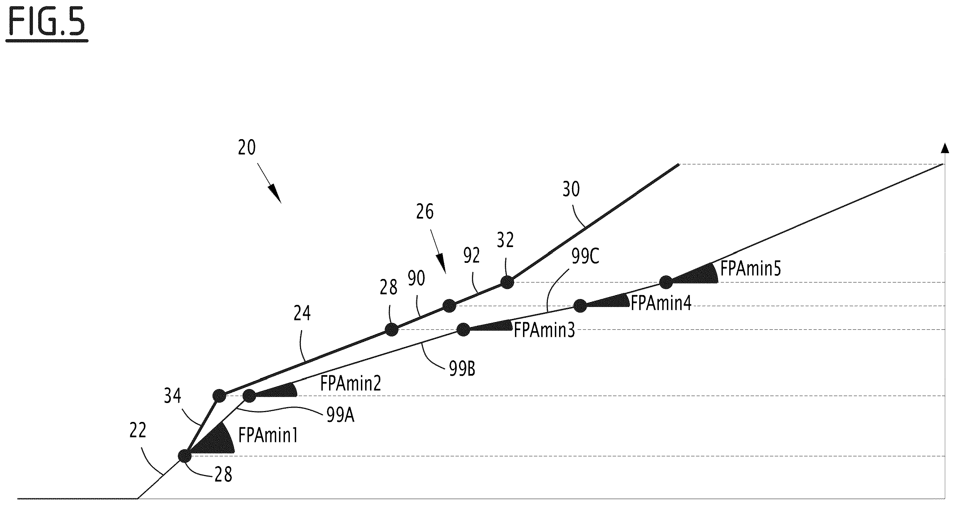

Dans une variante représentée dans la figure 5, le module de détermination 78 est configuré pour calculer la pente plancher précisément pour chaque segment de trajectoire avec abattement de bruit 24, 26 en tenant compte d'une cartographie définissant au moins un obstacle ou une contrainte de trajectoire, notamment un gradient aéroportuaire, en regard du ou de chaque segment de trajectoire présentant un abattement de bruit 24, 26.

En référence à la figure 1, le module de détermination 78 est ainsi configuré pour déterminer une pluralité de segments de trajectoire avec abattement de bruit 24, 26, et en correspondance, une pluralité de tronçons 99A, 99B, 99C de pente plancher ayant chacun une valeur de pente distincte.

Dans ce cas, chaque segment de trajectoire avec abattement de bruit 24, 26 présente une altitude d'entrée, une vitesse de consigne, une pente de consigne, une consigne de pseudo-pente totale TD_{NRED} , TD_{NACC} (qui peut être identique par exemple pour deux segments de trajectoire 26 successifs), et une pente plancher propre.

Le module de transmission 80 est propre, par exemple sur validation de l'utilisateur via l'interface homme-machine 86, à transmettre les caractéristiques des segments de trajectoire 22, 24, 26 ainsi que des tronçons de pente plancher 96, 98 ; 99A, 99B, 99C en correspondance avec les segments de trajectoire 22, 24, 26 depuis le système de détermination 12 vers le système de gestion de vol 16 afin que le système de gestion de vol 16 puisse élaborer des trajectoires géographiques précises de l'aéronef 10, ainsi que des consignes de gestion de poussée de l'aéronef, par exemple exprimées en pseudo-pente totale notamment dans les segments de trajectoire avec abattement de bruit 24, 26.

L'écran 82 est par exemple un écran propre au système de détermination 12, notamment dans le cas d'un système de détermination 12 non embarqué, ou est un écran de l'avionique 14, par exemple un écran du système de gestion de vol 16.

Le gestionnaire d'affichage 84 comprend avantageusement au moins une carte graphique raccordée aux modules de détermination 74, 76, 78. Il comprend au moins un processeur et une mémoire munie de modules d'exécution graphiques, propres à engendrer un affichage sur l'écran 82 pour afficher une représentation graphique de la trajectoire 20 dans un plan vertical, comme visible sur la figure 2.

Le système de gestion de vol 14 comprend par exemple au moins un calculateur 100 comprenant un processeur 102 et une mémoire 104 contenant des modules logiciels configurés pout être exécutés par le processeur 102. En variante, le système de gestion de vol 14 se présente au moins partiellement sous la forme d'un ou de plusieurs circuits programmables par exemple de type FPGA (de l'anglais « Field-Programmable Gate Array ») ou sous forme d'un circuit électronique dédié à une application de type ASIC (de l'anglais « Application-Specific Integrated Circuit).

Le système de gestion de vol 14 est configuré pour assister le pilote de l'aéronef pour mener la navigation de l'aéronef 10 lors d'une mission. Il est configuré pour fournir des informations notamment sur la route suivie par l'aéronef 10, et sur des paramètres d'évolution de l'aéronef 10 tels que la consommation en carburant.

Il est également configuré pour guider l'aéronef 10 afin de lui faire suivre une trajectoire prédéterminée. Avantageusement, le système de gestion de vol 14 comporte un module 104 de guidage vertical de l'aéronef 10 pour lui faire suivre une trajectoire verticale donnée.

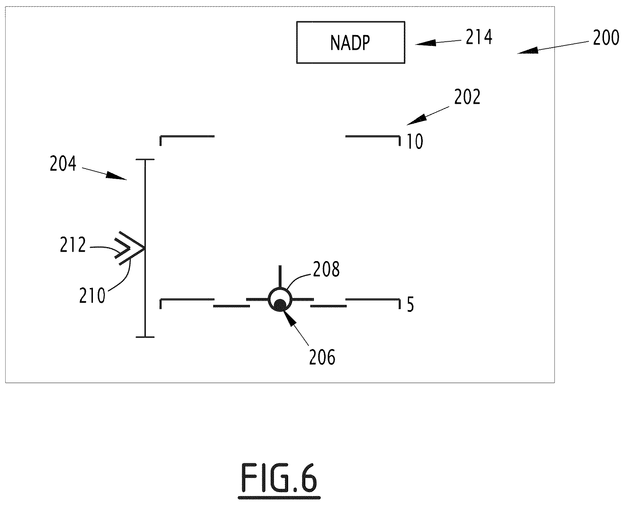

De préférence, le module de guidage vertical 104 est configuré pour recevoir des caractéristiques de la trajectoire 20 établies par le système de détermination 12 et à engendrer au moins un symbole de guidage, en particulier un symbole de directeur de vol 206 par rapport à une échelle de pente 202 sur un écran 200 de pilotage de l'aéronef 10 (voir figure 6) pour permettre au pilote de suivre manuellement la trajectoire 20. D'une manière connue, le pilote peut ainsi mettre en coïncidence la pente avion instantanée, mesurée par des capteurs de l'aéronef 10 et matérialisée par une maquette avion 208, avec le directeur de vol 206.

Le système de gestion de vol 14 comprend par exemple au moins un module 106 de calcul d'une pseudo-pente totale à appliquer sur la trajectoire 20, en utilisant notamment les valeurs de pseudo-pente totale déterminées par le système de détermination 12 et à engendrer au moins un symbole de guidage sur un écran de pilotage de l'aéronef 10, par exemple un premier chevron 210 à côté de l'échelle de pente 202, pour permettre au pilote d'appliquer manuellement la consigne de pseudo-pente totale à l'aide de la manette mobile 60 en utilisant une valeur instantanée de la pseudo-pente totale de l'aéronef 10. La valeur instantanée de la pseudo-pente totale de l'aéronef 10 est calculée par exemple par l'équation ci-dessus à partir de mesures de capteurs de l'aéronef 10 et est matérialisée par exemple par un deuxième chevron 212 sur une échelle 204 de pseudo-pentes totales, à mettre en coïncidence avec le premier chevron 210.

Le système de pilotage automatique 42 est configuré pour automatiser des tâches telles que le maintien d'une altitude, la montée ou la descente à une altitude donnée, le virage et le maintien d'un cap donné, l'interception d'une trajectoire, le guidage de l'aéronef 10 entre des points de cheminement qui constituent une route programmée dans le système de gestion de vol 16, et l'exécution d'une approche de précision ou de non-précision.

Le système de pilotage automatique 42 comprend un ensemble de servomoteurs qui exécutent le mouvement de commande et des circuits de commande pour que les servomoteurs se déplacent de la bonne quantité pour la tâche sélectionnée.

Le système de pilotage automatique 42 est configuré pour fournir la puissance de calcul nécessaire pour accomplir les tâches de vol, y compris la réception des données de navigation, des données du système de gestion de vol 16, des données environnementales, du pilote automatique sélectionné et des données provenant d'autres sources de données, et pour calculer les commandes nécessaires pour faire fonctionner l'aéronef 10 de la manière souhaitée.

En particulier, le système de pilotage automatique 42 est configuré pour permettre le suivi automatique de la trajectoire 20 dont les caractéristiques ont été établies par le système de détermination 12, à partir de données reçues du système de gestion de vol 16, en passant successivement dans un mode de pilotage automatique de décollage T/O pour exécuter le segment initial 22, puis dans un mode de pilotage automatique d'abattement de bruit NADP pour exécuter les segments 24, 26 présentant un abattement de bruit.

En outre, le système de pilotage automatique 42 est configuré, dans le mode de pilotage automatique d'abattement de bruit NADP, pour asservir la pseudo-pente totale de l'aéronef 10 en fonction de la valeur de consigne de pseudo-pente définie pour les segments 24, 26 et avantageusement à asservir la position de neutre mobile de la manette mobile 60.

La mise en œuvre d'une trajectoire d'aéronef 20 présentant un abattement de bruit au décollage va maintenant être décrite.

Initialement, le système de détermination 12 est activé pour définir les caractéristiques de la trajectoire 20. A cet effet, le module de détermination 74 détermine les caractéristiques du segment initial de trajectoire 22 effectué à poussée maximale, incluant sa pente de consigne, la poussée appliquée et la première altitude minimale 23 définie à laquelle ce segment 22 se termine.

Le module de détermination 76 détermine ensuite les caractéristiques des segments de trajectoire avec un abattement de bruit 24, 26. En particulier, il détermine, par exemple à partir de la mémoire 72, la pente de consigne, la valeur de la première consigne de pseudo-pente totale TD_{NRED} du premier segment de trajectoire 24, ainsi que la vitesse constante V2 + MV qui doit être maintenue lors du premier segment de trajectoire 24, et la deuxième altitude 28 à laquelle le premier segment de trajectoire 16 se termine.

Le module de détermination 76 détermine en outre les caractéristiques du deuxième segment de trajectoire 26 incluant la pente de consigne, la valeur de la deuxième consigne de pseudo-pente totale TD_{NACC}, supérieure à valeur de la première consigne de pseudo-pente totale TD_{NRED}, la vitesse de consigne VGP à atteindre, et éventuellement, l'altitude choisie 32 de fin du deuxième segment de trajectoire.

Le module de détermination 78 détermine, en regard de chaque segment de trajectoire 24, 26 présentant un abattement de bruit, la pente plancher à respecter.

Dans l'exemple représenté sur la figure 2, le module de détermination 78 détermine ainsi un premier tronçon 96 de pente plancher par exemple avec une valeur de pente plancher égale à la valeur de la première consigne de pseudo-pente totale TD_{NRED} moins une marge de prise en compte MP de conditions atmosphériques extérieures, le premier tronçon 96 correspondant au premier segment de trajectoire avec abattement de bruit 24.

Il détermine également un deuxième tronçon 98 de pente plancher par exemple avec une valeur constante de pente plancher configurée pour respecter une accélération de l'aéronef 10 supérieure au seuil d'accélération minimale donné, le deuxième tronçon 98 correspondant au deuxième segment de trajectoire avec abattement de bruit 26.

Les caractéristiques du segment initial 22, des premier et deuxième segments de trajectoire avec abattement de bruit 24, 26 et des tronçons 96, 98 de pente plancher correspondant aux premier et deuxième segments de trajectoire avec abattement de bruit 24, 26 sont ensuite transmises au système de gestion de vol 16 par l'intermédiaire du module de transmission 80, par exemple sur validation de l'utilisateur via l'interface homme machine 86.

Le système de gestion de vol 16 élabore alors des trajectoires géographiques précises de l'aéronef 10, ainsi que des consignes de pente et de gestion de poussée de l'aéronef, ces dernières étant par exemple exprimées en pseudo-pente totale dans les segments de trajectoire avec abattement de bruit 24, 26.

La trajectoire 20 ainsi déterminée est affichée sur un écran 82 par le gestionnaire d'affichage 84 pour permettre au pilote de visualiser la trajectoire 20 et éventuellement de l'ajuster ou de la modifier.

Lors du vol, et après le décollage de l'aéronef 10, le pilote en mode de pilotage manuel ou le système de pilotage automatique 42 dans un mode de pilotage automatique de décollage T/O suit le segment initial de trajectoire 22 à poussée maximale et à vitesse constante égale à la vitesse V2 de décollage plus la marge de vitesse MV jusqu'à la première altitude minimale prédéfinie 23.

Lorsqu'il passe cette altitude 23, le pilote en mode de pilotage manuel ou le système de pilotage automatique 42 dans un mode automatique d'abattement de bruit NADP suit alors chaque segment de trajectoire présentant un abattement de bruit 24, 26, en ajustant la pseudo-pente totale pour qu'elle respecte la première consigne de pseudo-pente totale TD_{NRED} jusqu'à la deuxième altitude 28, puis la deuxième consigne de pseudo-pente totale TD_{NACC} jusqu'à l'altitude choisie 32.

Comme illustré par la figure 6, sur l'écran de pilotage 200, le symbole de directeur de vol 206 se place sur l'échelle de pente 202 à la valeur de consigne de pente que le pilote ou le système de pilotage automatique 42 doit suivre pour respecter la pente de consigne. Lorsque le pilote ou le système de pilotage automatique règle la pente de l'aéronef 10 en conséquence, la maquette avion 208 matérialisant la pente instantanée de l'aéronef se place en coïncidence avec le symbole de directeur de vol 206.

De même, un symbole de guidage de pseudo-pente totale, notamment un premier chevron 210, s'affiche à à côté de l'échelle de pente 202, à la valeur de la consigne de pseudo-pente totale TD_{NRED}, TD_{NACC} que le pilote ou le système de pilotage automatique 42 doit suivre. Lorsque le pilote ou le système de pilotage automatique règle la pseudo-pente totale de l'aéronef 10 en conséquence, un deuxième chevron 212 matérialisant la pseudo-pente totale instantanée de l'aéronef 10 l'aéronef se place en coïncidence avec le symbole de guidage de pseudo-pente totale.

Un indicateur 214 de mode automatique d'abattement de bruit NADP s'affiche sur l'écran de pilotage 200 dans le cas où ce mode est activé.

Dans le premier segment de trajectoire avec abattement de bruit 24, l'aéronef 10 effectue une montée en suivant la première consigne de pseudo-pente totale TD_{NRED}, à vitesse constante égale à la même vitesse V2 + MV que celle du segment initial 22.

La pente de l'aéronef 10 correspond alors sensiblement à la première consigne de pseudo-pente totale TD_{NRED}. Le pilote ou le système de pilotage automatique 42 maintient à tout instant la pente de l'aéronef 10 au-dessus de la pente plancher définie dans le premier tronçon 96 de pente plancher comme égale à la valeur de la première consigne de pseudo-pente totale TD_{NRED} moins une marge de prise en compte MP de conditions atmosphériques extérieures.

Puis, lorsqu'il atteint la deuxième altitude 28, le pilote en mode de pilotage manuel ou le système de pilotage automatique 42 dans le mode automatique d'abattement de bruit NADP modifie la consigne de pseudo-pente totale, pour atteindre la deuxième consigne de pseudo-pente totale TD_{NACC} définie par le système de détermination 12.

Eventuellement, un transitoire, par exemple une rampe, peut être défini par le système de détermination 12 pour passer de la première consigne de pseudo-pente totale TD_{NRED} à la deuxième consigne de pseudo-pente totale TD_{NACC}.

Dans le premier tronçon 90 du deuxième segment de trajectoire avec abattement de bruit 26, la vitesse de l'aéronef augmente progressivement jusqu'à la vitesse de consigne définie VGP pour le deuxième segment de trajectoire avec abattement de bruit 26. L'aéronef 10 reste alors à tout instant au-dessus de la pente plancher définie par le deuxième tronçon 98 de pente plancher. Cette valeur de pente plancher est avantageusement égale à la valeur constante de pente pour respecter une accélération de l'aéronef 10 supérieure au seuil d'accélération minimale donné.

Puis, dans le deuxième tronçon 92 du deuxième segment de trajectoire avec abattement de bruit 26, lorsque la vitesse de consigne VGP a été atteinte, l'aéronef 10 augmente sa pente, pour progressivement atteindre la valeur de la deuxième consigne de pseudo-pente totale TD_{NACC}.

Lorsque l'altitude choisie 32 est atteinte, le pilote ou le système de pilotage automatique 42 passe dans un mode de pilotage automatique en montée pour accélérer encore l'aéronef 10 et suivre le plan de vol défini.

Dans la variante représentée sur la figure 4, pour une procédure d'abattement distant, le pilote en mode de pilotage manuel ou le système de pilotage automatique 42 dans un mode de pilotage automatique de décollage T/O suit le premier segment initial de trajectoire 22 à poussée maximale et à vitesse constante égale à la vitesse V2 de décollage plus la marge de vitesse MV jusqu'à la première altitude minimale prédéfinie 23. Ensuite, lors du passage à la première altitude 23, il suit le deuxième segment initial 34, lors duquel les volets et les becs sont rétractés, en maintenant la pseudo-pente totale de consigne pour ce deuxième segment initial 34 égale à la pseudo-pente totale T0 au régime moteur maximal.

Puis, lorsqu'il atteint la deuxième altitude 28, le pilote en mode de pilotage manuel ou le système de pilotage automatique 42 dans le mode automatique d'abattement de bruit NADP modifie la consigne de pseudo-pente totale, pour atteindre la deuxième consigne de pseudo-pente totale TD_{NACC} définie par le système de détermination 12. Dans ce dernier cas, la valeur de la consigne de pseudo-pente totale TD_{NACC} du segment d'abattement de bruit 24 distant est inférieure à la valeur de la pseudo-pente totale T0.

Plus généralement, le début du segment d'abattement de bruit 26 fixant la consigne de pseudo-pente totale TD_{NACC} peut être défini par le système de détermination 12 et mis en oeuvre par le pilote en mode de pilotage manuel ou par le système de pilotage automatique 42 dans le mode automatique d'abattement de bruit NADP, dès le début de l'accélération ou au cours de l'accélération en fonction d'une altitude, d'une vitesse ou d'un état avion (par exemple volets rentrés).

Les critères de définition de la valeur de la consigne de pseudo-pente totale TD_{NACC} pour la trajectoire de la figure 4 sont avantageusement ceux exposés plus haut pour le deuxième segment d'abattement de bruit 26 de la trajectoire visible sur la figure 2.

Grâce à l'instruction d'une consigne de pseudo-pente totale TD_{NRED}, TD_{NACC}, comme consigne de poussée dans chaque segment de trajectoire avec abattement de bruit 24, 26, il est possible de disposer d'un seul paramètre facilement accessible pour mettre en œuvre la réduction de poussée et donc l'abattement de bruit. La définition d'une consigne de pseudo-pente totale TD_{NRED}, TD_{NACC} offre ainsi au pilote un réglage beaucoup plus simple qu'un réglage moteur qui nécessite un calcul complexe de N1, d'EPR, de position de manette.

En particulier, le pilote n'a pas à consulter des tableaux à plusieurs entrées pour déterminer, à chaque préparation de mission, une consigne de paramètre moteur ou une consigne de paramètre vertical, puisque la consigne de pseudo-pente totale tient compte de la masse, de la température, de l'altitude, et de la configuration d'aéronef en un seul paramètre qui est homogène à une pente, et qui est donc simple à anticiper et à comprendre pour le pilote.

Au contraire d'une solution dans laquelle un pourcentage de poussée maximale est réglé, et dans lequel la poussée dépend du contrôle de ce réglage, la trajectoire 20 de l'aéronef 10 à vitesse constante est rectiligne.

En outre, le pilotage de l'aéronef 10 s'adapte directement à la configuration avion, puisque lorsque la configuration des volets et/ou des becs est modifiée, la tenue de la consigne de pseudo-pente totale TD_{NRED}, TD_{NACC} contribue à réduire la poussée et donc le bruit.

De même, en cas de panne moteur, la poussée du moteur sain s'adapte immédiatement pour continuer à suivre la consigne de pseudo-pente totale TD_{NRED}, TD_{NACC} désirée, et donc la trajectoire 20 souhaitée, jusqu'à l'atteinte de la poussée maximale du moteur sain.

Par ailleurs, la pente plancher définie pour chaque segment de trajectoire avec abattement de bruit 24, 26 permet à l'aéronef 10 de voler avec une poussée juste suffisante pour optimiser la trajectoire, en particulier le bruit et le confort, tout en évitant de se rapprocher des contraintes, par exemple des obstacles ou des gradients aéroportuaires. Une marge de sécurité adéquate est assurée par la pente plancher minimale définie et maintenue dans chaque tronçon 96, 98 ; 99A, 99B, 99C de pente plancher.

De la sorte, la trajectoire 20 définie par le système de détermination 12 et volée par l'aéronef 10 présente une marge de sécurité adéquate par rapport aux obstacles et suit la règlementation et les gradients aéroportuaires. Il est en outre possible de respecter strictement les contraintes qui s'appliquent dans les zones situées au voisinage d'un terrain, par exemple en calculant pour chaque segment de trajectoire avec abattement de bruit 24, 26, plusieurs tronçons 99A, 99B, 99C de pente plancher correspondant chacun à des sous-segments de trajectoire ayant une pente plancher identique. Ceci offre la possibilité d'affiner la gestion du bruit de manière fine le long de la trajectoire 20 lors d'un abattement de bruit.

Dans une variante, visible sur la figure 1, le système de gestion de vol 16 ou/et le système de détermination 12 comporte un module 108 de comparaison entre la pente volée par l'aéronef 10 à chaque position de l'aéronef et la pente plancher définie sur la trajectoire 20 pour cette position de l'aéronef 10, et un module 110 de déclenchement d'une alarme ou d'une augmentation de la poussée lorsque la pente volée passe en dessous de la pente plancher.

Dans encore une variante (non représentée), les caractéristiques de chacun du segment initial 22 et des segments de trajectoire avec abattement de bruit 24, 26 sont présentes directement dans une mémoire du système de gestion de vol 16 et ne sont pas paramétrables à l'aide d'un système de détermination 12.

Dans une variante, le système de détermination 12 comprend bien des modules 74, 76 de détermination des caractéristiques du segment initial 22 et des premier et deuxième segments de trajectoire avec abattement de bruit 24, 26. Le système de détermination 12 ne comprend cependant pas de module de détermination 78 d'une pente plancher. Au cours du vol, dans cette variante, la pente plancher n'est ni déterminée, ni surveillée.

Dans une autre variante, des trajectoires avec abattement de bruit n'utilisant pas une consigne de pseudo-pente totale sont déterminées par le système de détermination 12 ou/et sont volées par l'aéronef 10, par exemple sur la base d'une consigne réduite de régime moteur (« rating » en anglais), de pourcentage N1 ou d'EPR. Dans cette variante, une pente plancher est déterminée par le système de détermination 12 pour chaque segment de trajectoire avec abattement de bruit 24, 26 de la trajectoire 20 dans lequel la poussée moteur est réduite.

## Revendications

1. Méthode de détermination d'une trajectoire (20) d'aéronef (10) présentant un abattement de bruit au décollage, la méthode de détermination étant mise en œuvre à l'aide d'un système de détermination (12) et comprenant les étapes suivantes :
- détermination de caractéristiques d'un segment initial de trajectoire (22) effectué à poussée maximale jusqu'à une altitude minimale prédéfinie (23) ;
- détermination de caractéristiques d'au moins un segment de trajectoire présentant un abattement de bruit (24, 26) avec une poussée réduite par rapport à la poussée maximale pour atteindre une vitesse de consigne (VGP) ;
**caractérisé par** la définition d'au moins une pente plancher à respecter par l'aéronef (10) en correspondance avec le ou avec chaque segment de trajectoire présentant un abattement de bruit (24, 26).

2. Méthode de détermination selon la revendication 1, comprenant la définition d'une pluralité de tronçons de pente plancher (96, 98 ; 99A, 99B, 99C), chaque tronçon de pente plancher (96, 98 ; 99A, 99B, 99C) définissant une pente plancher distincte.

3. Méthode de détermination selon la revendication 2, comprenant au moins deux segments de trajectoire présentant un abattement de bruit (24, 26), les tronçons de pente plancher (96, 98 ; 99A, 99B, 99C) respectifs associés à chaque segment de trajectoire présentant un abattement de bruit (24, 26) respectif présentant des pentes planchers différentes l'une de l'autre.

4. Méthode de détermination selon l'une quelconque des revendications 2 à 3, dans laquelle la définition de chaque tronçon de pente plancher (99A, 99B, 99C) est effectuée en fonction d'une cartographie définissant au moins un obstacle ou une contrainte de trajectoire, notamment un gradient aéroportuaire, en regard du ou de chaque segment de trajectoire présentant un abattement de bruit (24, 26).

5. Méthode de détermination selon l'une quelconque des revendications précédentes, comprenant la définition d'une pente plancher commune correspondant à plusieurs segments de trajectoire présentant un abattement de bruit (24, 26).

6. Méthode de détermination selon la revendication 5, comprenant la définition d'une pente plancher unique pour tous les segments de trajectoire présentant un abattement de bruit (24, 26) depuis un point final du segment initial de trajectoire (22) à l'altitude minimale prédéfinie (23).

7. Méthode de détermination selon l'une quelconque des revendications précédentes, dans lequel la détermination des caractéristiques de l'au moins un segment de trajectoire présentant un abattement de bruit (24, 26) comprend la définition d'au moins une consigne de pente ou de pseudo-pente totale assurant la poussée réduite, la pente plancher étant égale à la consigne de pente ou de pseudo pente totale moins une marge de prise en compte de conditions atmosphériques extérieures ou/et la pente plancher étant égale à la pente nécessaire pour assurer une accélération de l'aéronef (10) supérieure à un seuil d'accélération minimale donné.

8. Méthode de détermination selon l'une quelconque des revendications précédentes, comprenant l'affichage sur un écran (82) du système de détermination (12) d'une représentation de la trajectoire (20) comprenant le segment initial de trajectoire (22) et le ou chaque segment de trajectoire présentant un abattement de bruit (24, 26), avec la pente plancher à respecter par l'aéronef (10) en correspondance avec le ou chaque segment de trajectoire présentant un abattement de bruit (24, 26) ou/et la transmission des caractéristiques du segment initial de trajectoire (22) et des caractéristiques définies du ou de chaque segment de trajectoire présentant un abattement de bruit (24, 26) à un système de gestion de vol de l'aéronef (10) et de la pente plancher à respecter par l'aéronef (10) en correspondance avec le ou chaque segment de trajectoire présentant un abattement de bruit (24, 26).

9. Procédé de pilotage d'un aéronef (10) suivant une trajectoire (20) d'aéronef (10) présentant un abattement de bruit au décollage, comprenant les étapes suivantes :
- suivi d'un segment initial de trajectoire (22) effectué à poussée maximale jusqu'à une altitude minimale prédéfinie (23) ;
- suivi d'au moins un segment de trajectoire présentant un abattement de bruit (24, 26) avec une poussée réduite par rapport à la poussée maximale pour atteindre une vitesse de consigne (VCP), **caractérisé par** le maintien de la pente de l'aéronef (10) au-dessus d'une pente plancher à respecter par l'aéronef (10) définie en correspondance avec le ou chaque segment de trajectoire présentant un abattement de bruit (24, 26) avec une poussée réduite, lors de la mise en œuvre du ou de chaque segment de trajectoire présentant un abattement de bruit (24, 26).

10. Procédé selon la revendication 9, comprenant lors de la mise en œuvre de l'au moins un segment de trajectoire présentant un abattement de bruit (24, 26), le suivi d'au moins une consigne de pente ou de pseudo-pente totale assurant la poussée réduite, la pente plancher étant égale à la consigne de pente ou de pseudo pente totale moins une marge de prise en compte de conditions atmosphériques extérieures ou étant égale à la pente nécessaire pour assurer une accélération de l'aéronef (10) supérieure à un seuil d'accélération minimale donné.

11. Procédé selon la revendication 9 ou 10, comprenant, lors de la mise en œuvre de l'au moins un segment de trajectoire présentant un abattement de bruit (24, 26), la comparaison entre une pente réelle de l'aéronef (10) et la pente plancher, et l'émission d'une information d'alerte dans le cas où la pente réelle devient inférieure à la pente plancher.

12. Procédé selon la revendication 11, comprenant la mise en œuvre d'un pilotage automatique de l'aéronef (10) pour rétablir une pente réelle supérieure à la pente plancher dans le cas où la pente réelle devient inférieure à la pente plancher.

13. Système de détermination (12) d'une trajectoire (20) d'aéronef (10) présentant un abattement de bruit au décollage, comprenant:
- un module (74) de détermination de caractéristiques d'un segment initial de trajectoire (22) effectué à poussée maximale jusqu'à une altitude minimale prédéfinie (23) ;
- un module (76) de détermination de caractéristiques d'au moins un segment de trajectoire présentant un abattement de bruit (24, 26) avec une poussée réduite par rapport à la poussée maximale pour atteindre une vitesse de consigne, **caractérisé par** :
- un module (78) de définition d'au moins une pente plancher à respecter par l'aéronef (10) en correspondance avec le ou avec chaque segment de trajectoire présentant un abattement de bruit (24, 26).

14. Aéronef (10), comprenant un système de gestion de vol (16) configuré pour suivre ou guider un pilote le long d'une trajectoire (20) d'aéronef (10) présentant un abattement de bruit au décollage, la trajectoire (20) comprenant:
- un segment initial de trajectoire (22) effectué à poussée maximale jusqu'à une altitude minimale prédéfinie (23) ;
- au moins un segment de trajectoire présentant un abattement de bruit (24, 26) avec une poussée réduite par rapport à la poussée maximale pour atteindre une vitesse de consigne,
**caractérisé en ce que** le système de gestion de vol (16) est configuré pour maintenir au moins une pente plancher à respecter par l'aéronef (10) en correspondance avec le ou avec chaque segment de trajectoire présentant un abattement de bruit (24, 26).
